# EUROPEAN PATENT SPECIFICATION

(11) **EP 2 727 826 B1**
(45) Date of publication and mention of the grant of the patent: **26.06.2019**
(21) Application number: 13179824.1
(22) Date of filing: 09.08.2013
(51) Int. Cl.: B64C 3/56, B64C 23/06

(54) **Hinged raked wing tip**
Schwenkbarer Winglet
Ailette d'extrémité de voilure articulée

(30) Priority: 30.10.2012 US 201213664416
(43) Date of publication of application: 07.05.2014
(60) Divisional application: 19175377.1
(73) Proprietor: The Boeing Company, Chicago, IL 60606-1596 (US)
(72) Inventor: Dees, Paul W., Chicago, IL Illinois 60606-2016 (US); Good, Mark S., Seattle, WA Washington 98117 (US); Sakurai, Seiya, Seattle, WA Washington 98144 (US); Kordel, Jan A., Redmond, WA Washington 98052 (US); Fox, Stephen J., Everett, WA Washington 98201 (US); Lassen, Matthew A., Chicago, IL Illinois 60606-2016 (US); Fox, Bruce R., Everett, WA Washington 98208 (US); Walker, Steven Paul, Chicago, IL Illinois 60606-2016 (US); Santini, Gregory M., Chicago, IL Illinois 60606-2016 (US)
(74) Representative: Witte, Weller & Partner Patentanwälte mbB

(56) References cited:
- EP-A1- 1 375 342
- EP-A1- 1 531 126
- WO-A1-2011/070532
- WO-A2-2011/051699
- GB-A- 2 454 588
- US-A1- 2010 084 516

## Description

### BACKGROUND

Long span wings are desirable for commercial aircraft as they are aerodynamically more efficient than shorter wings. The greater aerodynamic efficiency results in lower fuel consumption and, therefore, lowers operating costs.

However, existing airport designs place limits on aircraft wingspan. Airport designs are based on International Civil Aviation Organization (ICAO) Codes A through F, which establish dimensional limits on wingspan, landing gear width, length, etc. For instance, an ICAO Code E airport limits wingspan to less than 65 meters so the aircraft can fit within runways, taxiways, and gate areas.

EP 1 531 126 A1 discloses an aircraft comprising a wing tip device mounted in the region of the tip of a wing on the aircraft. The wing tip device is rotatably movable between a first position and a second position, in which the upward lift produced by the wing or the wing tip device is reduced. During flight the bending moment at the route of the aircraft wing therefore changes in dependence on the position of the wing tip device. The maximum bending moment in the aircraft wing sustained during high load conditions is therefore reduced, allowing the structural mass of the aircraft to be reduced. WO 2011/070532 A1 discloses a wing tip arrangement for an aircraft wing comprising at least one winglet movably mountable to an extremity of the wing and actuating means connected to the winglet for actuating in displacement of the winglet relative to the wing thereby altering the winglet's angle of attack and displacing same from an initial stationary position in which an in flight wake vortex shed from the wing is stable to a moving condition, in which the winglet is displaced to any selectable angle relative to a plane extending through a vertical longitudinal or lateral axis of the aircraft, to destabilize said in flight wake vortex. EP 1 375 342 A1 discloses an aircraft with active control of the warping of its wings. GB 2 454 588 A discloses an aircraft wing with valuable incidence tip, and WO 2011/051699 A2 discloses an aerofoil comprising an inboard section, a tip section movable between a flying configuration and a parked configuration.

A folding wing design may be used to reduce the span of these wings to fit within the limitations of an existing airport's infrastructure. Folding wings may be folded to fit within runways, taxiways, and gate areas, and they may be extended prior to takeoff to increase wingspan.

Folding wing designs are commonly used in naval aircraft. Folding wings enable naval aircraft to occupy less space in confined aircraft carrier hangars. Wing fold joints in naval aircraft use highly loaded hinges and locking pins acting over very small wing bending reaction moment arms. However, naval aircraft are much smaller than large commercial aircraft, and present folding wing designs for naval aircraft are optimized to different mission parameters than large commercial aircraft.

In commercial aircraft, a folding wing design may be scaled up. High reaction loads may be overcome by increasing the size of the hinges and locking pins. However, these size increases would increase aircraft weight, and increases in aircraft weight are undesirable because operating costs such as fuel costs are increased. Consequently, the increase in weight negates the advantages offered by the long span wings.

### SUMMARY

A wing assembly is defined in claim 1. A method of enhancing performance of an aircraft including wings with raked wing tips is defined in claim 8. Further embodiments are defined in the dependent claims.

The invention involves a wing assembly that includes a raked wing tip having an outboard portion hinged to a main wing having at least one moveable control surface, the outboard portion of the raked wing tip not carrying any moveable flight control surfaces. The wing assembly may be swept. The raked wing tip has greater leading edge sweep than the main section. The outboard portion is hinged about a hinge line. The hinge line may be oriented in a streamwise direction. The hinge line may be parallel to a ribwise direction. The hinge line may be oriented at an angle between streamwise and ribwise directions. The hinge line is coincident with a upper wing skin panel. The wing assembly includes a hinge assembly for hinging the outboard portion of the raked wing tip about the hinge line. The hinge assembly includes a stub spar extending past an end of the wing tip and into the main wing when the wing tip is extended, the stub spar reacting a moment load across a length of the stub spar. The hinge assembly may further include a hinge for hinging the wing tip to the main wing, the hinge located beneath an upper surface of the main wing. The hinge assembly may include at least one torque box extending from a closeout rib of the outboard portion, and at least one torque box extending from a closeout rib of the inboard portion of the wing assembly, the torque boxes hinged together so the outboard portion can be folded about the hinge line. The wing assembly may also include a means for moving the outboard portion between folded and extended positions. The wing assembly may have a Code E wingspan when the outboard portion of the raked tip is folded. The wing tip and the main wing may be configured for a commercial aircraft.

These features and functions may be achieved independently in various embodiments or may be combined in other embodiments. Further details of the embodiments can be seen with reference to the following description and drawings.

### BRIEF DESCRIPTION OF THE DRAWINGS

FIG. 1 is an illustration of an aircraft.
FIGS. 2A and 2B are illustrations of a wing tip in a folded position and an extended position.
FIGS. 3A, 3B and 3C are illustration of a raked wing tip with a hinge line oriented in a streamwise direction.
FIG. 4 is an illustration of a raked wing tip with a hinge line oriented in a ribwise direction.
FIG. 5 is an illustration of a raked wing tip with a hinge line oriented in between streamwise and ribwise directions.
FIG. 6 is an illustration of a raked wing tip with a hinge line that is coincident with a skin panel.
FIG. 7 is an illustration of a raked wing tip with a vertical hinge line.
FIGS 8A and 8B are illustrations of a raked wing tip with a vertical hinge line and a movable panel for enabling interference-free movement between folded and extended positions.
FIG. 9 is an illustration of a raked wing tip and hinge assembly including a stub spar.
FIG. 10 is an illustration of a wing assembly including a hinge assembly with hinged torque boxes.
FIG. 11 is an illustration of a method of enhancing performance of a commercial aircraft including wings with raked wing tips.

### DETAILED DESCRIPTION

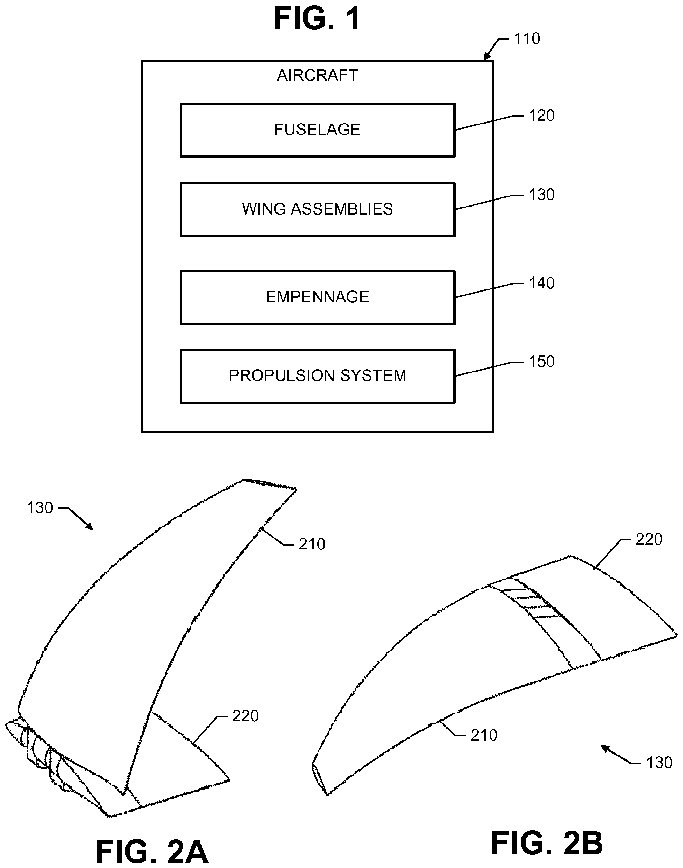

Reference is made to Figure 1, which illustrates an aircraft 110 including a fuselage 120, wing assemblies 130 attached to the fuselage 120, and empennage 140 attached to the fuselage 120. One or more propulsion units 150 are coupled to the fuselage 120, wing assemblies 130 or other portions of the aircraft 110. Each wing assembly 130 includes a main wing and a wing tip that is hinged for movement between a folded position and an extended position. The main wings may be swept forward, have zero sweep, or be swept aft. The wing tips may be folded to fit the aircraft 110 within runways, taxiways, and gate areas. Folding the wing tips enables the aircraft to comply with airport codes, such as ICAO codes. The wing tips may be extended prior to takeoff to increase wingspan. The higher span enables higher aerodynamic efficiency.

FIG. 2A and 2B are illustrations of a wing assembly 130 including raked wing tip 210 hinged to a main wing 220. FIG. 2A shows the wing tip 210 in a folded position, and FIG. 2B shows the wing tip 210 in an extended position, which results in the wing tip in approximately the same plane as the rest of the outboard portion of the main wing 220. In some embodiments, the wing tip 210 may be folded in a roughly vertical position to minimize ground area. In other embodiments, the wing tip 210 may be folded back onto the main wing 220.

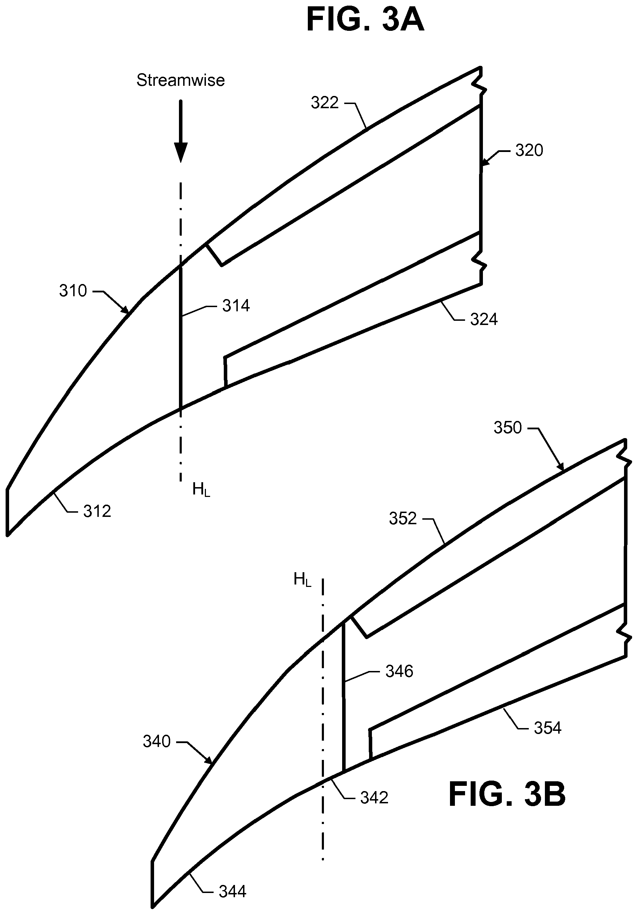

FIGS. 3A to 9 illustrate main wings and raked wing tips. A main wing may include one or more wing boxes (each wing box including, for example, front and rear spars, ribs, stringers, and upper and lower skin panels), a leading edge, and a trailing edge. The leading edge has a leading edge sweep angle. The main wing further includes moveable flight control surfaces such as slats, flaps, ailerons and spoilers.

A raked wing tip may be generally characterized by (1) a leading edge sweep angle that is greater than the main wing leading edge sweep angle, and (2) chord length decreasing significantly in a spanwise direction. The leading edge sweep angle of the raked wing tip may increase singularly in some embodiments and progressively in other embodiments.

The raked wing tip includes an outboard portion. The outboard portion does not carry any moveable flight control surfaces. In some examples, the raked wing tip may also include an inboard portion. The inboard portion of the raked wing tip may or may not carry moveable flight control surfaces.

Reference is now made to FIG. 3A, which illustrates a raked wing tip 310 whose outboard portion 312 is hinged to a main wing 320. The outboard portion 310 is hinged about a hinge line H_{L}, which is oriented in a streamwise (e.g. fore and aft) direction. The hinge line H_{L} coincides with the root 314 of the wing tip 310.

The outboard portion 312 may be folded about the hinge line H_{L} between an extended position and an upward (e.g., vertical) folded position. The outboard portion 312 may be folded about the hinge line H_{L} between an extended position and a downward (e.g., vertical) folded position.

The outboard portion 312 of the raked wing tip 310 does not include any moveable flight control surfaces. The main wing 320 does include moveable flight control surfaces, including, but not limited to, a slat 322 and an aileron 324. The slat 322 may have a straight or curved leading edge (a curved leading edge is shown in FIG. 3A).

Reference is now made to FIG. 3B, which illustrates a raked wing tip 340 having an inboard portion 342 and an outboard portion 344 that is hinged to the inboard portion 342. The hinge line H_{L} is oriented in a streamwise direction. The inboard portion is that portion between the hinge line H_{L} and the root 346 of the wing tip 340. The root 346 of the wing top 340 is fixed to a main wing 350. The inboard portion 342 of FIG. 3B does not carry any moveable surfaces, whereas the main wing 350 does carry moveable flight control surfaces 352 and 354.

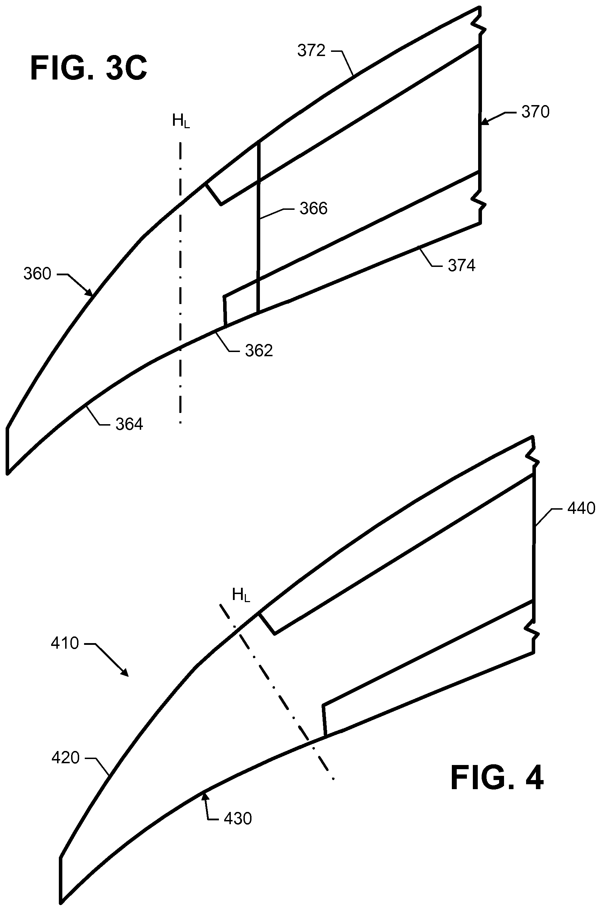

Reference is now made to FIG. 3C, which also illustrates a raked wing tip 360 having an inboard portion 362 and an outboard portion 364 that is hinged to the inboard portion 362. A root 364 of the wing tip 360 is fixed to a main wing 370. In the example of FIG. 3C, however, the inboard portion 362 includes a flight control surface (a slat 372 and aileron 374).

FIGS. 4 to 8 illustrate different (non-streamwise) orientations of the hinge line. In each of these Figures 4-8, the root of the wing tip is hinged to the main wing (that is, the outboard portion hinged to the main wing). It is understood, however, that each of these different hinge line orientations may be applied to wings in which the outboard portions of the wing tips are hinged to inboard portions of the wing tips.

Reference is now made to FIG 4, which illustrates a wing assembly 410 including the outboard portion 420 of the raked wing tip 430 hinged to the main wing 440 about a hinge line H_{L} that is oriented in a ribwise direction. The ribwise direction is parallel to the closeout rib (not shown) of the main wing 440. An advantage of the ribwise orientation is easer integration of systems and structure.

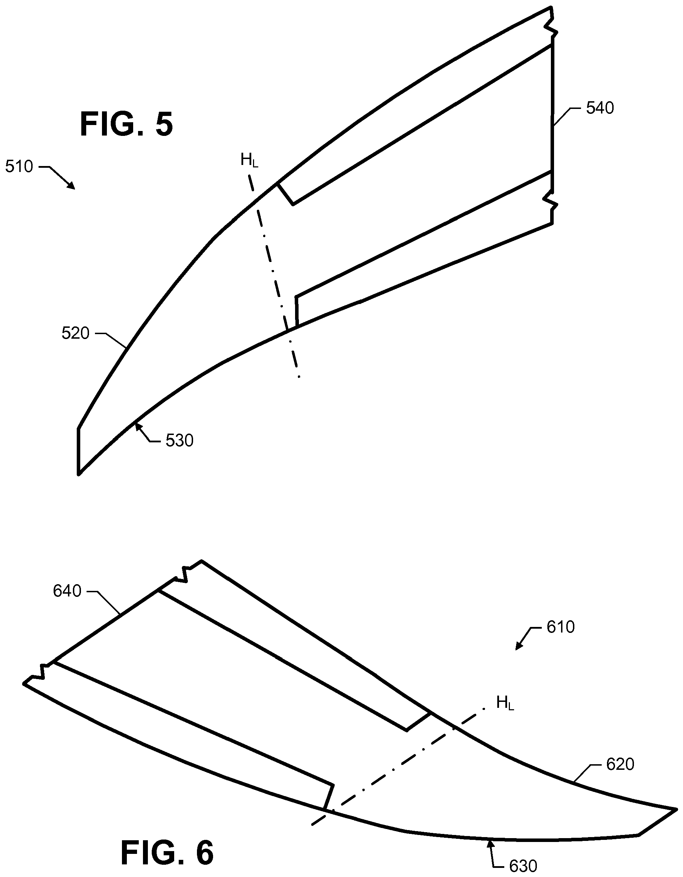

Reference is now made to FIG 5, which illustrates a wing assembly 510 including the outboard portion 520 of the raked wing tip 530 hinged to the main wing 540 about a hinge line H_{L} that is oriented between the streamwise and ribwise directions. An advantage of this hinge line orientation is a balance between favorable integration and torsional stiffness.

Reference is now made to FIG 6, which illustrates a wing assembly 610 including the outboard portion 620 of the raked wing tip 630 hinged to the main wing 640 about a hinge line H_{L} that is coincident with a skin panel. The skin panel may be an upper panel or a lower panel. An advantage of this hinge line orientation is easier integration of fold actuators.

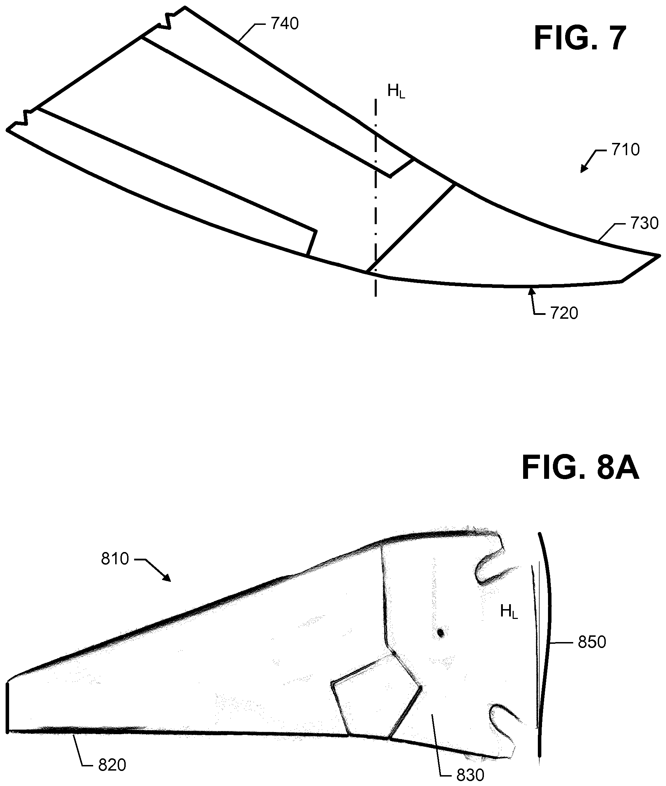

Reference is now made to FIG. 7, which illustrates a wing assembly 710 including the outboard portion 730 of the raked wing tip 720 hinged to the main wing 740 about a substantially vertical hinge line H_{L} within the wing assembly 710. The wing tip 720 is moved to an extended position to maximize wingspan, and the wing tip 720 is moved to a folded position to increase sweep. An advantage of this vertical orientation is lower loads in cross winds.

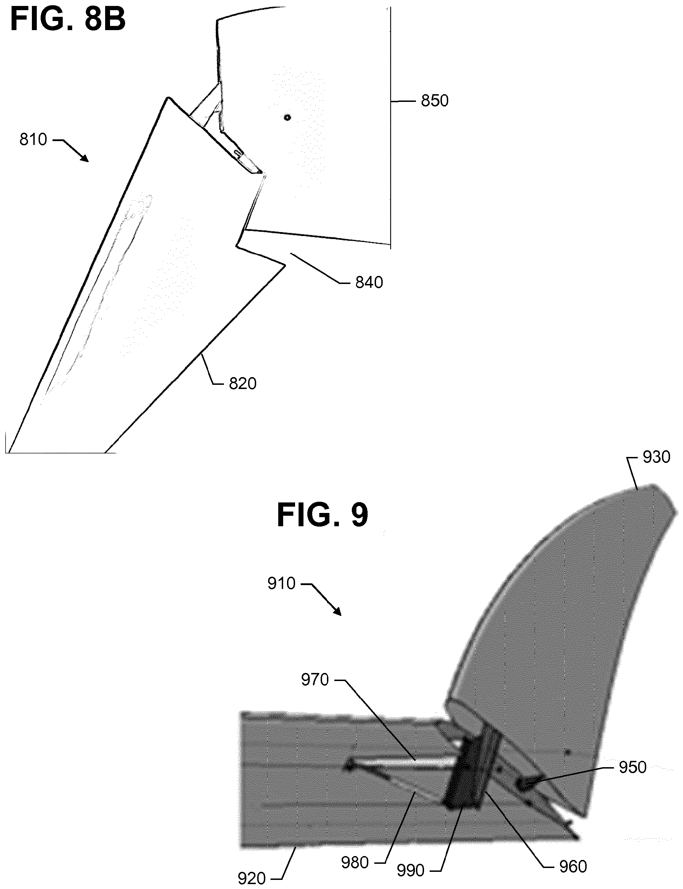

Reference is now made to FIGS 8A and 8B, which illustrate a wing assembly 810 including a raked wing tip 820 with a movable panel 830 for enabling interference-free movement between folded and extended positions. As shown in FIG. 8B, the wing tip 820 includes an opening 840 at its root. The opening 840 enables the wing tip 820 to avoid inboard interference with the main wing 850 when the wing tip 820 is folded.

As shown in FIG. 8A, the moveable panel 830 covers the opening 840 when the wing tip 820 is extended. The moveable panel 830 may be opened and closed by a slaved mechanical linkage or an actuator.

The outboard portion is hinged to either the inboard portion or the main wing by a hinge assembly. The hinge assembly is not limited to any particular type. In some embodiments, the hinge assembly may include conventional hinges and locking pins. The outboard portion may be hinged to an upper skin panel for upward folding, or to a lower skin panel for downward folding. The locking pins lock the outboard portion in either the folded position or the extended position.

According to the invention, the hinge assembly includes a stub spar. As shown in FIG. 9, a wing 910 includes hinges 950 for allowing the wing tip 930 to fold about the upper surface of the main wing section 920. Thus, the hinge line is coincident with the upper skin panel. The wing tip 930 further includes at least one stub spar 960. Each stub spar 960 extends from an end of the wing tip 930. Each stub spar 960 is part of the wing tip 930 and rotates with the wing tip 930.

A single stub spar 960 is shown in Figure 9. When the wing tip 930 is folded to the folded position, that stub spar 960 is roughly vertical (as shown in Figure 9). As the wing tip 930 is being folded towards the extended position, that stub spar 960 enters into the main wing section 920 via a stub spar door 970. When the wing tip 930 reaches the extended position, that stub spar 960 is aligned with at least one of the spars in the main wing section 920.

The wing tip 930 may be folded by applying force to a free end of the stub spar 960. The force may be generated by an actuator (not shown) and transmitted to the stub spar 960 via a rod 980. A locking pin receptacle 990 is located at a free end of the stub spar 960. The receptacle 990 receives a locking pin when the wing tip is in the extended position The locking pin locks the stub spar 960 to an aligned spar in the main wing section 920.

The stub spar 960 redirects the moment arm (along the main wing section 920) and provides a longer moment arm than a conventional design. In a conventional design, the moment arm is taken across the distance between wing surfaces (that is, the short height of the wing thickness). The longer moment arm reduces reacting forces on a locking pin and hinges 150. This enables smaller, lighter hinges and locking pins to be used. It also enables the hinges 150 to be mounted between skin panels. Because the hinges 150 are not external, either drag is reduced or a fairing is not needed to reduce drag.

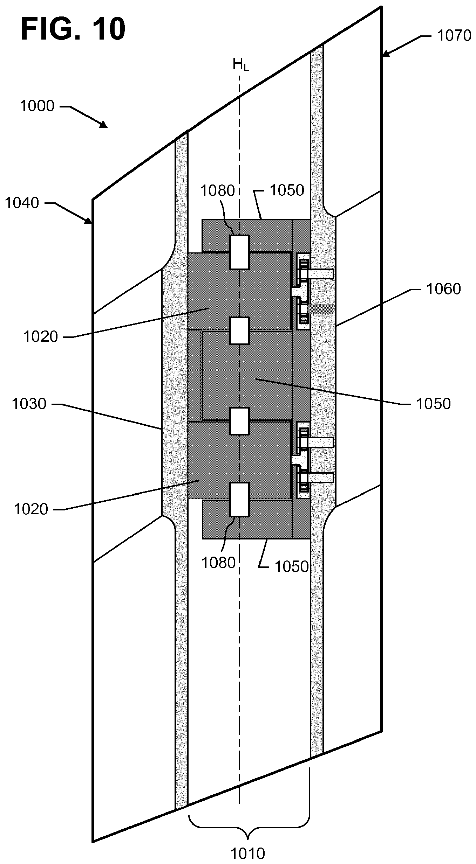

The hinge assembly may include hinged torque boxes. As illustrated in FIG. 10, the hinge assembly 1010 includes at least one torque box 1020 extending from a closeout rib 1030 of an outboard portion 1040, and at least one torque box 1050 extending from a closeout rib 1060 of an inboard portion 1070 of a wing assembly 1000. The torque boxes 1020 and 1050 are hinged together via hinge lines 1080 so the outboard portion 1040 can be folded about a hinge line H_{L}.

A wing assembly herein may have a long wingspan, yet still be used in existing airports. The longer wingspan enables higher aerodynamic efficiency.

A wing assembly herein may have a long span, yet still be used in existing airports. The higher span enables higher aerodynamic efficiency.

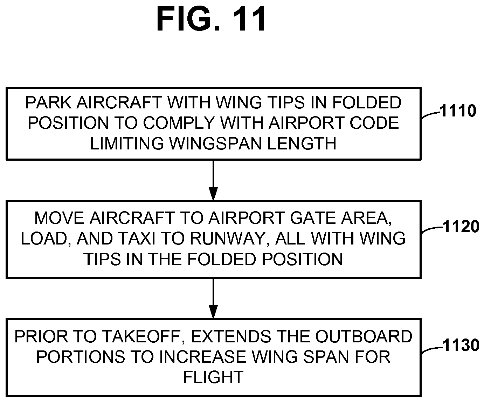

Reference is now made to FIG. 11, which illustrates a method of enhancing performance of a commercial aircraft including wing assemblies with raked wing tips. The aircraft is located at an airport that place limits on aircraft's wingspan. For instance, the airport is an ICAO Code E airport, which limits wingspan to less than sixty five meters.

At block 1110, the aircraft is parked with outboard portions of its wing tips in a folded position. At block 1120, the aircraft is moved to a gate area, loaded, and taxied to a runway. The wing tips remain in the folded position so the aircraft can fit within taxiways en route to the runway.

At block 1130, prior to takeoff, the outboard portions of the wing tips are extended for flight. By extending the outboard portions, wingspan is increased and, as a result, aerodynamic efficiency is increased. The greater aerodynamic efficiency results in lower fuel consumption and, therefore, lower operating costs.

## Claims

1. A wing assembly comprising a raked wing tip (310, 340, 360, 430, 530, 630, 720, 820) having an outboard portion (312; 344; 364; 420; 520; 620; 1040) hinged to a main wing (220; 320; 350; 370; 440; 540; 640; 740; 850; 920) having spars and at least one moveable control surface (352, 354, 830); the outboard portion (344, 364) of the raked wing tip not carrying any moveable flight control surfaces, the raked wing tip being defined by a leading edge sweep angle that is greater than the main wing leading edge sweep angle, wherein the outboard portion (312; 344; 364; 420; 520; 620; 1040) is movable between a vertically folded position and an extended position in which the outboard portion of the raked wing tip is approximately in the same plane as the rest of the main wing to increase wingspan for flight;
wherein the wing tip (930) includes at least one stub spar (960), each stub spar (960) extending from an end of the outboard portion of the wing tip (930);
wherein the wing includes hinges (950) for allowing the wing tip to fold about the upper surface of the main wing, the hinges defining a hinge line coincident with the upper skin panel;
wherein when the wing tip (930) is being folded towards the extended position, each stub spar (960) is adapted to enter into the main wing (920) and when the wing tip (930) reaches the extended position, each stub spar (960) is aligned with at least one of the spars in the main wing (920); and
wherein a locking pin receptacle (990) is located at a free end of each stub spar (960), the receptacle (990) being adapted to receive a locking pin when the wing tip is in the extended position, so that the locking pin locks the stub spar (960) to an aligned spar in the main wing (920).

2. The wing assembly of claim 1, wherein the outboard portion (312; 344; 364; 420; 520; 620; 1040) is hinged to the main wing.

3. The wing assembly of any of the preceding claims, wherein the wing assembly is swept.

4. The wing assembly of any of the preceding claims, wherein the hinge line (Hₗ)is oriented in a streamwise direction.

5. The wing assembly of any of the preceding claims, wherein the hinge line is parallel to a ribwise direction.

6. The wing assembly of any of the preceding claims, wherein the hinge line is oriented at an angle between streamwise and ribwise directions.

7. The wing assembly of any of the preceding claims, wherein the wing tip and the main wing are configured for a commercial aircraft.

8. A method of enhancing performance of an aircraft including wings with raked wing tips, the raked wing tip being defined by a leading edge sweep angle that is greater than a main wing leading edge sweep angle, the method comprising folding outboard portions of the raked wing tips in a vertically folded position to comply with an airport code limiting wingspan length, and extending the outboard portions in an extended position to increase wingspan for flight; wherein the outboard portion does not have any moveable flight control surfaces, and wherein in the extended position the outboard portion of the raked wing tip is approximately in the same plane as the rest of the main wing;
wherein the wing tip (930) includes at least one stub spar (960), each stub spar (960) extending from an end of the outboard portion of the wing tip (930);
wherein the wing includes hinges (950) for allowing the wing tip to fold about the upper surface of the main wing, the hinges defining a hinge line coincident with the upper skin panel;
wherein when the wing tip (930) is being folded towards the extended position, each stub spar (960) enters into the main wing (920) and when the wing tip (930) reaches the extended position, each stub spar (960) is aligned with at least one of the spars in the main wing (920); and
wherein a locking pin receptacle (990) is located at a free end of each stub spar (960), the receptacle (990) receiving a locking pin when the wing tip is in the extended position, so that the locking pin locks the stub spar (960) to an aligned spar in the main wing (920).

## Patentansprüche

1. Flügelanordnung mit einer geneigten Flügelspitze (310, 340, 360, 430, 530, 630, 720, 820) mit einem Außenabschnitt (312; 344; 364; 420; 520; 620; 1040), der an einem Hauptflügel (220; 320; 350; 370; 440; 540; 640; 740; 850; 920) mit Holmen und mindestens einer beweglichen Steuerfläche (352, 354, 830) angelenkt ist; der Außenabschnitt (344, 364) der geneigten Flügelspitze keine beweglichen Flugsteuerflächen trägt, wobei die geneigte Flügelspitze durch einen Vorderkanten-Pfeilwinkel definiert ist, der größer ist als der Hauptflügel-Vorderkanten-Pfeilwinkel, wobei der Außenabschnitt (312; 344; 364; 420; 520; 620; 1040) zwischen einer vertikal gefalteten Position und einer ausgefahrenen Position beweglich ist, in der sich der Außenabschnitt der geneigten Flügelspitze ungefähr in der gleichen Ebene wie der Rest des Hauptflügels befindet, um die Spannweite für den Flug zu erhöhen;
wobei die Flügelspitze (930) mindestens einen Stummelholm (960) beinhaltet, wobei sich jeder Stummelholm (960) von einem Ende des Außenbereichs der Flügelspitze (930) erstreckt, wobei der Flügel Scharniere (950) beinhaltet, um es der Flügelspitze zu ermöglichen, sich um die Oberseite des Hauptflügels zu falten, wobei die Scharniere eine Scharnierlinie definieren, die mit der oberen Außenfläche übereinstimmt;
wobei, wenn die Flügelspitze (930) in Richtung der ausgefahrenen Position gefaltet wird, jeder Stummelholm (960) angepasst ist, um in den Hauptflügel (920) einzutreten, und wenn die Flügelspitze (930) die ausgefahrene Position erreicht, jeder Stummelholm (960) mit mindestens einem der Stäbe im Hauptflügel (920) ausgerichtet ist; und
wobei eine Verriegelungsstiftaufnahme (990) an einem freien Ende jedes Stummelholms (960) angeordnet ist, wobei die Aufnahme (990) angepasst ist, um einen Verriegelungsstift aufzunehmen, wenn sich die Flügelspitze in der ausgefahrenen Position befindet, so dass der Verriegelungsstift den Stummelholm (960) an einem ausgerichteten Holm in dem Hauptflügel (920) verriegelt.

2. Flügelanordnung nach Anspruch 1, wobei der Außenabschnitt (312; 344; 364; 420; 520; 620; 1040) am Hauptflügel angelenkt ist.

3. Flügelanordnung nach einem der vorstehenden Ansprüche, wobei die Flügelanordnung gepfeilt ist.

4. Flügelanordnung nach einem der vorhergehenden Ansprüche, wobei die Scharnierlinie (HI) in einer Strömungsrichtung ausgerichtet ist.

5. Flügelanordnung nach einem der vorhergehenden Ansprüche, wobei die Scharnierlinie parallel zu einer Rippenrichtung ist.

6. Flügelanordnung nach einem der vorhergehenden Ansprüche, wobei die Scharnierlinie in einem Winkel zwischen Strömungs- und Rippen- Richtung ausgerichtet ist.

7. Flügelanordnung nach einem der vorstehenden Ansprüche, wobei die Flügelspitze und der Hauptflügel für ein Verkehrsflugzeug konfiguriert sind.

8. Verfahren zum Verbessern der Leistung eines Flugzeugs, das Flügel mit geneigten Flügelspitzen aufweist, wobei die geneigte Flügelspitze durch einen Vorderkanten-Pfeilwinkel definiert ist, der größer ist als ein Hauptflügel-Vorderkanten-Pfeilwinkel, wobei das Verfahren das Falten von Außenabschnitten der geneigten Flügelspitzen in einer vertikal gefalteten Position umfasst, um einer durch einen Flughafen-Code begrenzente Spannweite zu entsprechen, und das Verlängern der Außenabschnitte in eine ausgefahrene Position, um die Spannweite für den Flug zu erhöhen; wobei der Außenabschnitt keine beweglichen Flugsteuerflächen aufweist, und wobei in der ausgefahrenen Position der Außenabschnitt der geneigten Flügelspitze ungefähr in der gleichen Ebene wie der Rest des Hauptflügels liegt;
wobei die Flügelspitze (930) mindestens einen Stummelholm (960) aufweist, wobei sich jeder Stummelholm (960) von einem Ende des Außenbereichs der Flügelspitze (930) erstreckt, wobei der Flügel Scharniere (950) aufweist, um es der Flügelspitze zu ermöglichen, sich um die Oberseite des Hauptflügels zu falten, wobei die Scharniere eine Scharnierlinie definieren, die mit der oberen Hautplatte übereinstimmt;
wobei, wenn die Flügelspitze (930) in Richtung der ausgefahrenen Position gefaltet wird, jeder Stummelholm (960) in den Hauptflügel (920) eintritt und wenn die Flügelspitze (930) die ausgefahrene Position erreicht, jeder Stummelholm (960) mit mindestens einem der Stäbe im Hauptflügel (920) ausgerichtet ist; und
wobei eine Verriegelungsstiftaufnahme (990) an einem freien Ende jedes Stummelholms (960) angeordnet ist, wobei die Aufnahme (990) einen Verriegelungsstift aufnimmt, wenn sich die Flügelspitze in der ausgefahrenen Position befindet, so dass der Verriegelungsstift den Stummelholm (960) an einem ausgerichteten Holm in dem Hauptflügel (920) verriegelt.

## Revendications

1. Ensemble d'aile comprenant un saumon d'aile en flèche (310, 340, 360, 430, 530, 630, 720, 820) ayant une partie extérieure (312 ; 344 ; 364 ; 420 ; 520 ; 620 ; 1040) articulée à une aile principale (220 ; 320 ; 350 ; 370 ; 440 ; 540 ; 640 ; 740 ; 850 ; 920) ayant des longerons et au moins une surface de commande mobile (352, 354, 830) ; la partie extérieure (344, 364) du saumon d'aile en flèche ne portant pas de surfaces de commande de vol mobiles, le saumon d'aile en flèche étant défini par un angle de flèche de bord d'attaque qui est supérieur à l'angle de flèche de bord d'attaque de l'aile principale, la partie extérieure (312 ; 344 ; 364 ; 420 ; 520 ; 620 ; 1040) pouvant être déplacée entre une position repliée verticalement et une position étendue dans laquelle la partie extérieure du saumon d'aile en flèche est approximativement dans le même plan que le reste de l'aile principale de manière à augmenter l'envergure de l'aile en vol ;
le saumon d'aile (930) comportant au moins un longeron de bout (960), chaque longeron de bout (960) s'étendant depuis une extrémité de la partie extérieure du saumon d'aile (930) ;
l'aile comportant des articulations (950) pour permettre au saumon d'aile de se replier autour de la surface supérieure de l'aile principale, les articulations définissant une ligne d'articulation coïncidant avec le panneau de peau supérieur ;
chaque longeron de bout (960), lorsque le saumon d'aile (930) est replié vers la position étendue, étant prévu pour entrer dans l'aile principale (920), et lorsque le saumon d'aile (930) atteint la position étendue, chaque longeron de bout (960) étant aligné avec au moins l'un des longerons dans l'aile principale (920) ; et
un réceptacle de goupille de verrouillage (990) étant situé au niveau d'une extrémité libre de chaque longeron de bout (960), le réceptacle (990) étant prévu pour recevoir une goupille de verrouillage lorsque le saumon d'aile est dans la position étendue de telle sorte que la goupille de verrouillage verrouille le longeron de bout (960) à un longeron aligné dans l'aile principale (920).

2. Ensemble d'aile selon la revendication 1, dans lequel la partie extérieure (312 ; 344 ; 364 ; 420 ; 520 ; 620 ; 1040) est attachée de manière articulée à l'aile principale.

3. Ensemble d'aile selon l'une quelconque des revendications précédentes, dans lequel l'ensemble d'aile est en flèche.

4. Ensemble d'aile selon l'une quelconque des revendications précédentes, dans lequel la ligne d'articulation (H₁) est orientée dans la direction d'écoulement.

5. Ensemble d'aile selon l'une quelconque des revendications précédentes, dans lequel la ligne d'articulation est parallèle à une direction dans le sens de la nervure.

6. Ensemble d'aile selon l'une quelconque des revendications précédentes, dans lequel la ligne d'articulation est orientée suivant un angle compris entre les directions de l'écoulement et de la nervure.

7. Ensemble d'aile selon l'une quelconque des revendications précédentes, dans lequel le saumon d'aile et l'aile principale sont configurés pour un avion commercial.

8. Procédé d'amélioration de la performance d'un aéronef comportant des ailes avec des saumons d'aile en flèche, le saumon d'aile en flèche étant défini par un angle de flèche de bord d'attaque qui est supérieur à un angle de flèche de bord d'attaque d'aile principale, le procédé comprenant le repliement de parties extérieures des saumons d'aile en flèche dans une position repliée verticalement de manière à ce qu'ils soient conformes à un code d'aéroport limitant la longueur d'envergure d'aile, et le déploiement des parties extérieures dans une position étendue de manière à augmenter l'envergure en vol ; la partie extérieure ne présentant pas de surfaces de commande de vol mobiles, et dans la position étendue, la partie extérieure du saumon d'aile en flèche étant approximativement dans le même plan que le reste de l'aile principale ;
le saumon d'aile (930) comportant au moins un longeron de bout (960), chaque longeron de bout (960) s'étendant depuis une extrémité de la partie extérieure du saumon d'aile (930) ;
l'aile comportant des articulations (950) pour permettre au saumon d'aile de se replier autour de la surface supérieure de l'aile principale, les articulations définissant une ligne d'articulation coïncidant avec le panneau de peau supérieur ;
chaque longeron de bout (960), lorsque le saumon d'aile (930) est replié vers la position étendue, entrant dans l'aile principale (920), et lorsque le saumon d'aile (930) atteint la position étendue, chaque longeron de bout (960) étant aligné avec au moins l'un des longerons dans l'aile principale (920) ; et
un réceptacle de goupille de verrouillage (990) étant situé au niveau d'une extrémité libre de chaque longeron de bout (960), le réceptacle (990) étant prévu pour recevoir une goupille de verrouillage lorsque le saumon d'aile est dans la position étendue de telle sorte que la goupille de verrouillage verrouille le longeron de bout (960) à un longeron aligné dans l'aile principale (920).
